# EUROPÄISCHE PATENTSCHRIFT

(11) **EP 0 707 516 B1**
(45) Veröffentlichungstag und Bekanntmachung des Hinweises auf die Patenterteilung: **08.07.1998**
(21) Anmeldenummer: 95917345.1
(22) Anmeldetag: 20.04.1995
(51) Int. Cl.: B01J 2/06, B01J 2/26

(54) **VERFAHREN UND VORRICHTUNG ZUM REINIGEN CHEMISCHER SUBSTANZEN**
PROCESS AND DEVICE FOR PURIFYING CHEMICAL SUBSTANCES
PROCEDE ET DISPOSITIF DE PURIFICATION DE SUBSTANCES CHIMIQUES

(30) Priorität: 05.05.1994 DE 4415845
(43) Veröffentlichungstag der Anmeldung: 24.04.1996
(73) Patentinhaber: Santrade Ltd., CH-6002 Luzern (CH)
(72) Erfinder: KÖNIG, Axel, D-70374 Stuttgart (DE); ULRICH, Joachim, D-28203 Bremen (DE)
(74) Vertreter: Wilhelm, Hans-Herbert, Dr.-Ing.
(86) Internationale Anmeldenummer: EP9501497
(87) Internationale Veröffentlichungsnummer: WO9530478

(56) Entgegenhaltungen:
- DE-C- 3 813 756
- DE-C- 4 041 669
- US-A- 3 272 893

## Beschreibung

Die Erfindung betrifft ein Verfahren und eine Vorrichtung zum Reinigen chemischer Substanzen, die zunächst geschmolzen werden, unter Wärmeentzug auskristallisieren und nach Förderung durch eine Waschkolonne als gereinigtes Produkt entnehmbar sind.

Es ist bekannt, zur Gewinnung dieser Substanzen, die sogenannte Schmelzkristallisation einzusetzen, wobei man in sogenannten Waschkolonnen versucht, die an den Kristallen anhaftende Restschmelze zu entfernen, um dann durch Aufschmelzen der Kristalle die gereinigte Substanz zu erhalten. Die in der Schmelzkristallisation vorgesehenen Waschkolonnen (BIWIC 1990-Bremer International Workshop for Industrial Crystallization vom 12. und 13.09.1990 in Bremen) arbeiten grundsätzlich zufriedenstellend. Ihre Wirkung wird jedoch dadurch beeinträchtigt, daß sie beispielsweise mit Kristallbrei aus Kratzkühlern gespeist werden. Die Größenverteilung der in den Kratzkühlern erzeugten kristallienen Partikel ist dabei sehr breit und die Form der Partikel ist uneinheitlich. Es gibt auch eine Vielzahl von Agglomeraten. Durch die an diesen Teilchen anhaftende und mit Verunreinigungen angereichte Restschmelze wird daher die gute Stofftrennung der Kristallisationsverfahren stark verringert. Wegen der ungleichen Partikelformen sind die Waschkolonnen, in denen eine Umströmung der Partikel für den Reinigungsvorgang vorgesehen ist, überfordert. Es sind zwar auch schon Verfahren zum Reinigen chemischer Substanzen bekanntgeworden (DE-C-40 41 669), bei denen man geschmolzene Substanzen zunächst in Tropfenform gebracht hat und zu Pastillen erstarren lassen hat. Bei diesen bekannten Verfahren werden die Pastillen aber in einem Heißgasstrom einem Schwitzvorgang unterzogen, wobei die Temperatur des Heißgasstromes und dessen Strömungsgeschwindigkeit auf die Größe und die Eigenschaften der Pastillen so abgestimmt werden muß, daß die auf einer durchlässigen Förderauflage liegenden Pastillen nur in dem Bereich dieser Förderauflage dem Schwitzvorgang unterworfen werden, so daß die abschmelzenden Pastillenoberflächen durch die durchlässigen Auflagen abtropfen und die verbleibenden Pastillen quer zur Abtropfrichtung weggefördert werden. Mit einer Reinigung chemischer Substanzen in Waschkolonnen hat diese Einrichtung nichts zu tun.

Der vorliegenden Erfindung liegt daher die Aufgabe zugrunde, ein Verfahren und eine Vorrichtung vorzuschlagen, mit der die Wirkleistung von Waschkolonnen in der Schmelzkristallisation verbessert werden kann.

Ausgehend von der Überlegung, daß diese Aufgabe nur dann gelöst werden kann, wenn bezüglich der Suspension eine möglichst einheitliche Beschickung der Waschkolonnen vorgesehen ist, besteht die Erfindung darin, daß zumindest ein Teil der chemischen Substanzen nach dem Schmelzen in die Form monodisperser Partikel gebracht wird und daß diese Partikel dann zusammen mit Schmelze, oder auch ohne diese, zur Speisung der Waschkolonne dienen.

Durch diese Verfahrensweise können die Waschkolonnen mit quasi monodispersen Partikeln von einstellbarer hinreichender Größe gespeist werden, was den entscheidenden Vorteil mit sich bringt, daß eine sehr gleichmäßige Umströmung aller Partikel und damit auch eine intensive und wesentlich wirkungsvollere Reinigung stattfinden. Dabei ist es in Weiterbildung der Erfindung zweckmäßig, wenn die Partikel nicht vollständig erstarrt sind, also z.B. in der Regel nur außen fest, aber nach innen nicht vollständig verfestigt sind, ehe sie der Waschkolonne zugeführt werden. Man erreicht dadurch einen guten Stoffübergang für die nachfolgende Reinigung. Während die Partikel nämlich aufgrund von Dichtedifferenz und/oder Zwangsförderung in der Kolonne bewegt werden, findet der gewünschte Stoffübergang bzw. Stoffaustausch statt, der zur Reinigung führt. Waschkolonnen können auf diese Weise sehr effektiv arbeiten, die Produktion kann erhöht werden, und zwar nicht nur im klassischen Sinn zum Abtrennen der anhaftenden Restschmelze, sondern auch um die eigentliche Trennung bzw. bestmöglichste Reinigung und eine Restreinigung sicherzustellen.

Zur Durchführung des neuen Verfahrens hat sich eine Vorrichtung als besonders einfach erwiesen, die durch eine einer Schmelzvorrichtung nachgeschaltete und einer Waschkolonne vorgeschaltete Granuliereinrichtung zur Erzeugung der monodispersen Partikel gekennzeichnet ist. Dabei hat es sich als besonders vorteilhaft und einfach erwiesen, als Granuliereinrichtung sogenannte Rotoformer zu verwenden, wie sie Gegenstand des deutschen Patentes DE-C-28 53 054 sind und von der Firma Sandvik Process System in Fellbach bei Stuttgart hergestellt und vertrieben werden.

Die Erfindung ist anhand von Ausführungsbeispielen in der Zeichnung dargestellt und wird im folgenden erläutert. Es zeigen
- Fig. 1: eine schematische Darstellung einer Vorrichtung zum Reinigen einer schmelzbaren und auskristallisationsfähigen Substanz,
- Fig. 2: die schematische Darstellung einer Vorrichtung ähnlich Fig. 1, bei der jedoch die weiter zu verarbeitende Substanz in anderer Weise aufbereitet wird,
- Fig. 3: eine Detaildarstellung der in den Fig. 1 und 2 vorgesehenen Waschkolonne mit einer vorgeschalteten Granuliereinrichtung,
- Fig. 4: eine Darstellung ähnlich Fig. 3, jedoch bei einer Variante der Waschkolonne, und
- Fig. 5: eine weitere Variante einer Waschkolonne in einer Darstellung nach Fig. 4.

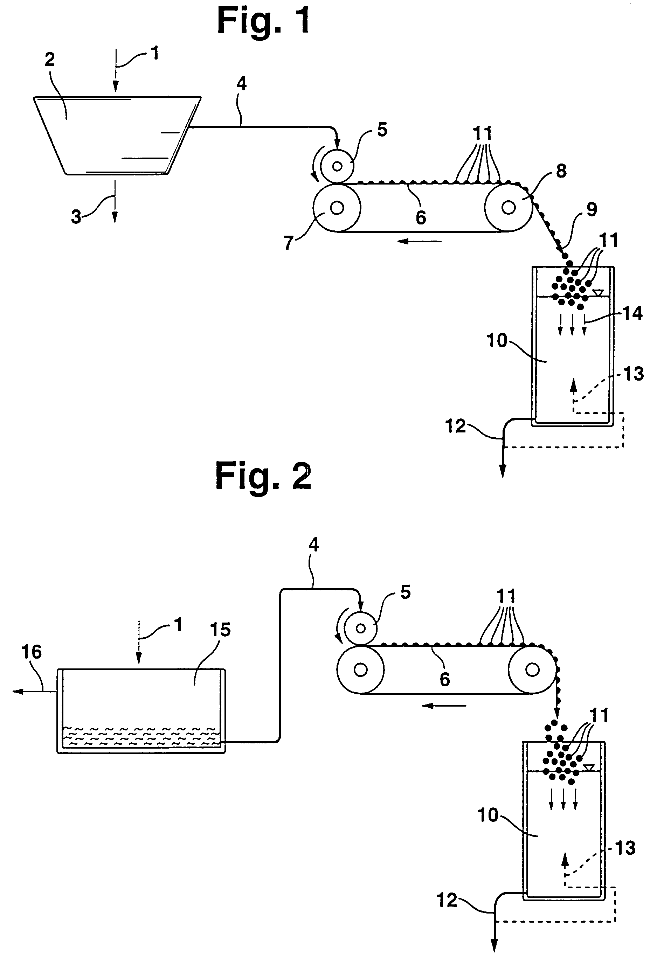

In der Fig. 1 ist eine Einrichtung gezeigt, bei der eine Schmelze einer chemischen Substanz im Sinn des Pfeiles (1) einer Filtervorrichtung (2) zugeführt wird, aus der das Filtrat im Sinn des Pfeiles (3) entnommen wird. Die Schmelze, die in an sich bekannter Weise mit Kristallkeimen und Kristallen versehen ist, wird aus dem Filter (2) durch eine Leitung (4) abgezogen und einer Granuliereinrichtung (5) zugeführt, die beim Ausführungsbeispiel in der Form eines sogenannten Rotoformers ausgebildet ist, bei dem in ein stillstehendes und auf der Unterseite mit einem Schlitz versehenes Innenrohr axial die Masse eingeführt und durch am Umfang eines äußeren rotierenden Rohres vorgesehenen Öffnungen nach unten auf ein Kühlband (6) abgegeben wird. Die Masse wird dabei durch die jeweils zyklisch zur Deckung kommenden Öffnungen in Tropfenform abgegeben und sie verfestigt sich auf dem Kühlband (6), das über zwei Umlenkwalzen (7 und 8) geführt ist, soweit, daß sie am Ende des Kühlbandes (6) im Sinn des Pfeiles (9) einer an sich bekannten Waschkolonne (10) zugeführt werden kann.

Da die von der Vorrichtung (5) abgegebenen Tropfen alle die gleiche Größe haben, bilden sich daher auf dem Kühlband (6) pastillenartige Partikel (11), die alle gleiche Größe aufweisen und daher als monodispers bezeichnet werden können. Diese Pastillen (11) bilden daher definierte Partikel in der Waschkolonne, die im Gegensatz zu dem Kratzkristallisat bekannter Einrichtungen nicht zur Klumpenbildung oder zur Agglomeration neigen. Die Pastillen (11) sinken dann innerhalb der Waschkolonne (10) in der Waschflüssigkeit entweder aufgrund der Dichtedifferenz oder auch durch eine Zwangsförderung nach unten ab. Sie bewegen sich dabei im Gegenstrom zu der Waschflüssigkeit, die beispielsweise aus einer Schmelze aus der am Ende der Waschkolonne über die Leitung (12) entnommenen gereinigten Substanz bestehen kann. Diese Waschflüssigkeit strömt im Sinn des Pfeiles (13) entgegen der Bewegungsrichtung (14) der Pastillen (11).

Die einzelnen Pastillen (11) werden auf diese Weise sehr gut erfaßt und es findet auch eine gleichmäßige Beaufschlagung aller Partikel durch die Waschflüssigkeit statt. Dadurch ergibt sich ein besserer Ertrag und auch ein reineres Produkt. Die Vorrichtung arbeitet mit Waschkolonnen nach dem Stand der Technik auch energiewirtschaftlicher.

Die in der Fig. 2 gezeigte Vorrichtung, die ebenfalls nach dem erfindungsgemäßen Verfahren arbeitet, unterscheidet sich von der Einrichtung der Fig. 1 lediglich dadurch, daß die dem Rotoformer (5) zugeführte, mit Kristallen angereicherte Schmelze in an sich ebenfalls bekannter Weise durch Sedimentation in einem entsprechenden Behälter (15) gebildet wird, der mit einem Überlauf (16) versehen ist. Die übrige Ausgestaltung entspricht jener der Einrichtung der Fig. 1.

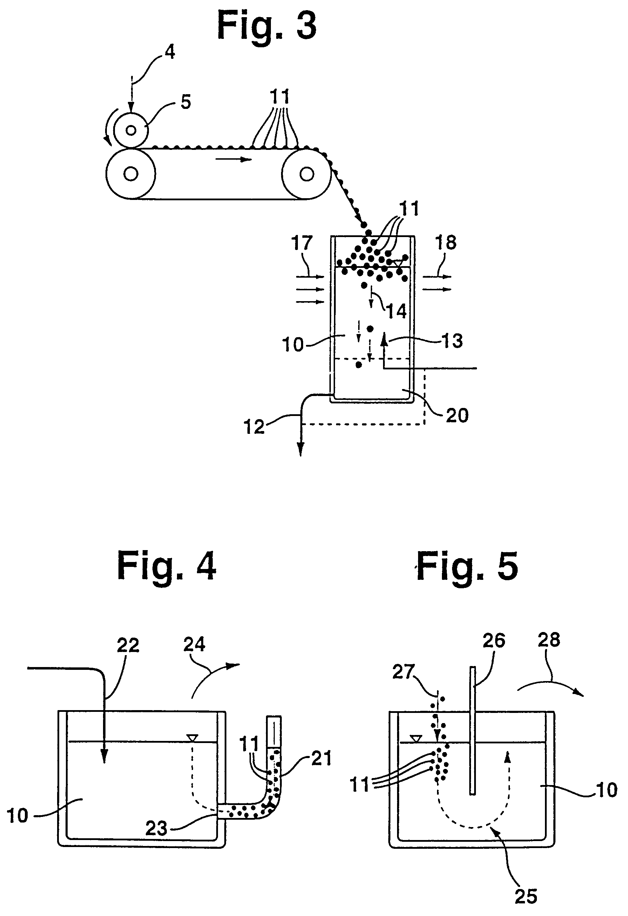

Die Fig. 3 macht noch einmal im Detail deutlich, daß aus der durch die Leitung (4) zugeführten Schmelze zunächst pastillenartige Partikel (11) gleicher Größe gebildet werden, die dann weitgehend gleichmäßig über den Querschnitt der Waschkolonne (10) verteilt und im Sinne der Pfeile (14) bewegt werden, wobei die Waschflüssigkeit im Gegenstrom geführt wird. Darüber hinaus ist es möglich, dieser Waschkolonne (10) Wärme zuzuführen oder abzuführen, was durch die Pfeile (17 und 18) zum Ausdruck kommen soll.

Die Fig. 3 läßt auch erkennen, daß im untersten Bereich (20) der Waschkolonne (10) ein Raum entsteht, der durch die Wirkungsweise der Waschkolonne (10) mit Pastillen (11) angefüllt ist, die durch ihre Förderung im Gegenstrom weitestgehend von verunreinigter Restschmelze befreit sind. Es wird auch deutlich, daß sich bei der Förderung der Pastillen (11) durch die Waschkolonne (10) folgende Stoffübergangs- bzw. Austauschvorgänge ergeben, die zur Reinigung führen:
1. Ein Aufschmelzen bzw. Abschmelzen der - noch nicht vollständig erstarrten Partikel (11) im oberen Teil der Waschkolonne (10) und ein Aufkristallisieren von reinem Stoff im unteren Bereich (20).
2. Ein Schwitzen, d.h. ein selektives Aufschmelzen der niederschmelzenden Verunreinigungen, die an der Oberfläche der Partikel angelegert sind und ein anschließendes Austreten dieser Komponenten aufgrund des thermischen Effektes.
3. Eine Diffusionswäsche, d.h. ein Diffundieren der flüssigen Verunreinigungen aus dem Inneren der Partikel (11) aufgrund der Konzentrationsdifferenz zur reineren Waschflüssigkeit. Dabei handelt es sich um einen von der Verweilzeit der Partikel (11) in der Waschflüssigkeit abhängigen Effekt.

Das neue Verfahren und die zu seiner Durchführung vorgesehenen Vorrichtungen eröffnen daher in einfacher Weise eine vorteilhafte Möglichkeit, bekannte Einrichtungen (Waschkolonnen) für eine wirkungsvollere Produktion auszunützen.

Alternativ wäre es auch möglich, wie in Fig. 4 gezeigt, die vom Band (6) (nicht gezeigt) kommenden Pastillen (11) nicht oben in die Waschkolonne (10) einzugeben, sondern seitlich oder von unten durch einen Zufuhrstutzen (21) zuzuführen. Dies insbesondere dann, wenn die Dichte der Pastillen geringer ist, als jene der Waschflüssigkeit, die in diesem Fall auch von einem Punkt (22) aus zugeführt werden kann, der höher liegt als die Zuführstelle (23) der Pastillen (11), die im Sinn des Pfeiles (24) gereinigt (oder auch als Schmelze) entnommen werden können.

In einer weiteren Variante nach Fig. 5 ist es auch möglich, die Pastillen (11) (die vom Band (6) kommen) durch eine Zwangsführung (25) um eine Trennwand (26) herum innerhalb der Waschflüssigkeit zu bewegen, so daS sie z.B. oben bei (27) zugegeben und bei (28) auch abgenommen werden können. Auch Kombinationen der Strömungsformen der Fig. 4 und 5 mit jenen der Fig. 1 bis 3 sind denkbar.

Bei allen Ausführungsformen ist es nicht notwendig, die Pastillen vollständig aufzuschmelzen. Es läßt sich auf diese Weise u.U. auch nur eine Oberflächenreinigung der Pastillen durchführen.

## Patentansprüche

1. Verfahren zum Reinigen chemischer Substanzen, die zunächst geschmolzen werden, unter Wärmeentzug auskristallisieren und nach Förderung durch eine Waschkolonne als gereinigtes Produkt entnehmbar sind, dadurch gekennzeichnet, daß zumindest ein Teil der chemischen Substanzen nach dem Schmelzen in die Form monodispersen Partikel (11) gebracht wird und daß diese Partikel zusammen mit Schmelze oder ohne eine solche zur Speisung der Waschkolonne (10) dienen.

2. Verfahren nach Anspruch 1, dadurch gekennzeichnet, daß die Partikel (11) nicht vollständig erstarrt sind, ehe sie der Waschkolonne (10) zugeführt werden.

3. Vorrichtung zur Durchführung des Verfahrens nach Anspruch 1, gekennzeichnet durch eine einer Schmelzvorrichtung nachgeschaltete und einer Waschkolonne (10) vorgeschaltete Granuliereinrichtung (5) zu Erzeugung der monodispersen Partikel (11).

4. Vorrichtung nach Anspruch 3, dadurch gekennzeichnet, daß als Granuliereinrichtung ein an sich bekannter Rotoformer (5) mit einem darunter angeordneten Kühlband (6) vorgesehen ist.

## Claims

1. A method of cleaning chemical substances, which are firstly melted, crystallised due to the withdrawal of heat and can then be drawn off as a cleaned product having been conveyed through a washing column, characterised in that at least a part of the chemical substances is brought to a state of mono-disperse particles (11) after melting and these particles are delivered with or without melt to the washing column (10).

2. A method as claimed in claim 1, characterised in that the particles (11) are fed to the washing column (10) before they have completely solidified.

3. A device for implementing the method as claimed in claim 1, characterised by a granulating device (5) incorporated downstream of a melting device and upstream of a washing column for producing the mono-disperse particles (11).

4. A device as claimed in claim 3, characterised in that the granulating device is provided in the form of a known roto-former (5) having a cooling belt (6) arranged underneath.

## Revendications

1. Procédé de purification de substances chimiques que l'on fait fondre d'abord, cristalliser en évacuant la chaleur et, que l'on reprend, après avoir été transportées dans une colonne de lavage, sous forme de produit purifié, caractérisé en ce que, après la fusion, au moins une partie des substances chimiques est mise en forme de particules monodispersées (11) et que ces particules, ensemble avec la matière fondue ou sans celle - ci , servent à alimenter la colonne de lavage (10).

2. Procédé selon la revendication 1, caractérisé en ce que les particules (11) ne sont pas entièrement solidifiées avant d'être apportées à la colonne de lavage (10).

3. Dispositif pour la mise en oeuvre du procédé selon la revendication 1, caractérisé en ce que l'on utilise un dispositif de granulation (5) installé après le dispositif de fusion et avant une colonne de lavage (10) pour produire des particules monodispersées (11).

4. Dispositif selon la revendication 3, caractérisé en ce que l'on prévoit comme appareil de granulation un Rotoformer connu en soi avec une bande refroidissante (6) disposée en dessous de celui-ci.
